# EUROPEAN PATENT SPECIFICATION

(11) **EP 4 501 182 B1**
(45) Date of publication and mention of the grant of the patent: **01.07.2026**
(21) Application number: 24220651.4
(22) Date of filing: 07.05.2021
(51) Int. Cl.: A47J 31/44

(54) **COFFEE MACHINE AND METHOD FOR DISPENSING A MILK EMULSION WITH SAID COFFEE MACHINE**
KAFFEEMASCHINE UND VERFAHREN ZUR AUSGABE EINER MILCHEMULSION MIT DER KAFFEEMASCHINE
MACHINE À CAFÉ ET PROCÉDÉ DE DISTRIBUTION D'UNE ÉMULSION DE LAIT AVEC LADITE MACHINE À CAFÉ

(30) Priority: 19.06.2020 IT 202000014716
(43) Date of publication of application: 05.02.2025
(62) Divisional of application: 21724645.3
(73) Proprietor: De' Longhi Appliances S.r.l., 31100 Treviso (IT)
(72) Inventor: PANCIERA, Antonio, 31100 Treviso (IT); ROSETTA, Simone, 31100 Treviso (IT)
(74) Representative: Rapisardi, Mariacristina

(56) References cited:
- EP-A1- 2 878 241
- EP-A1- 3 162 257
- DE-A1- 102005 004 852
- US-B2- 7 644 652

## Description

The present invention refers to a coffee machine and to a method for dispensing a milk emulsion with said coffee machine.

Coffee machines are widely available commercially today comprising a milk container having a Venturi-effect milk-emulsifying device, such device is for example disclosed in EP 3 162 257 A1. These coffee machines are designed to obtain an emulsion of hot milk in a cup.

In practice the steam produced by a boiler of the coffee machine is fed into a mixing chamber provided in the emulsifying device where the Venturi effect creates a vacuum that draws milk from a suitable container of the milk and air from the external atmospheric environment.

Typically, the temperature of the milk emulsion is significantly greater than the environmental temperature of 25 °C and this is due to the fact that the steam required to trigger the Venturi effect has the further effect of heating the milk.

In fact, typically, a milk emulsion can be produced at a final temperature in the cup comprised between 50°C and 75°C.

It has been ascertained that the temperature of a foodstuff affects the perception of the taste that occurs in the taste buds of the tongue and is completed with the aroma perceived by the receptors of the nasal mucous.

In fact, in the mouth, the temperature of the food or of the beverage modifies the microscopic channels of the taste buds and the sending of the signal to the brain through the taste nerves. Below 15°C, the taste buds are almost paralysed, whereas at 37°C the sensitivity of the taste buds increases over 100 times and for this reason the sweet taste of an ice cream is perceived only when it melts in the mouth.

On the other hand, hot food emits vapours that reach the nasal mucous and contribute about 80% to the perception of taste, but if the temperature exceeds 35°C, the perception of taste decreases, because the sensation of burning hides the tasting nuances.

The technical task addressed by the present invention is thus to make a coffee machine adapted to heighten the perception of the taste of the dispensed milk emulsion.

Within the context of this technical task, an aim of the invention is to make a coffee machine that is suitable for dispensing a milk emulsion at low temperature.

Another aim of the invention is to make a coffee machine having a milk-emulsifying device that is easy to clean.

A further aim of the invention is to make a coffee machine having a kit of interchangeable milk emulsifying devices for producing milk emulsion at low temperature and at high temperature. The technical task, and these and other aims according to the present invention are achieved by a coffee machine and a dispensing method for dispensing a milk emulsion into a cup with a coffee machine according to the appended independent claims.

In one embodiment of the invention a flow of milk emulsion is dispensed having a value comprised between 10 g/s and 15 g/s at a temperature no more than 20°C higher than the temperature of the milk present in the milk container.

In one embodiment of the invention said container is filled with milk having a temperature comprised between 3°C and 7°C.

In one embodiment of the invention, said milk container has thermal insulation.

In one embodiment of the invention, said milk aspirating channel is interchangeable with a milk aspirating channel having a smaller minimal passage area.

In one embodiment of the invention, the coffee machine has a cup resting surface, the external coffee dispenser is configured and arranged for direct dispensing into a cup positioned on the cup resting surface, and the external milk emulsion dispenser is configured and arranged for direct dispensing into said cup.

Further features and advantages of the invention will become more apparent from the description of a preferred, but not exclusive, embodiment of the coffee machine according to the invention, which is illustrated by way of approximate and non-limiting example in the attached drawings, of which:

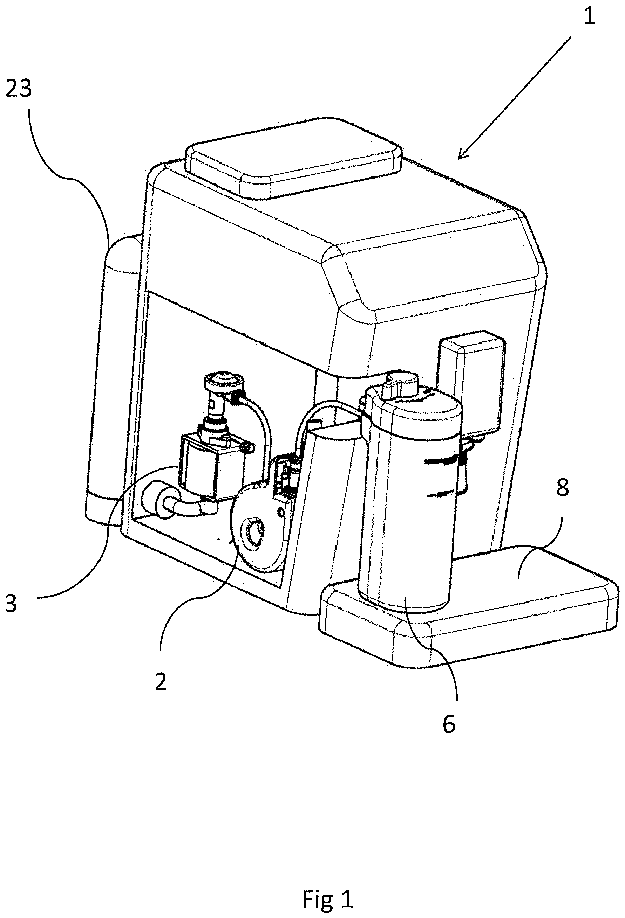

- figure 1 shows the coffee machine with the emulsifying device connected;

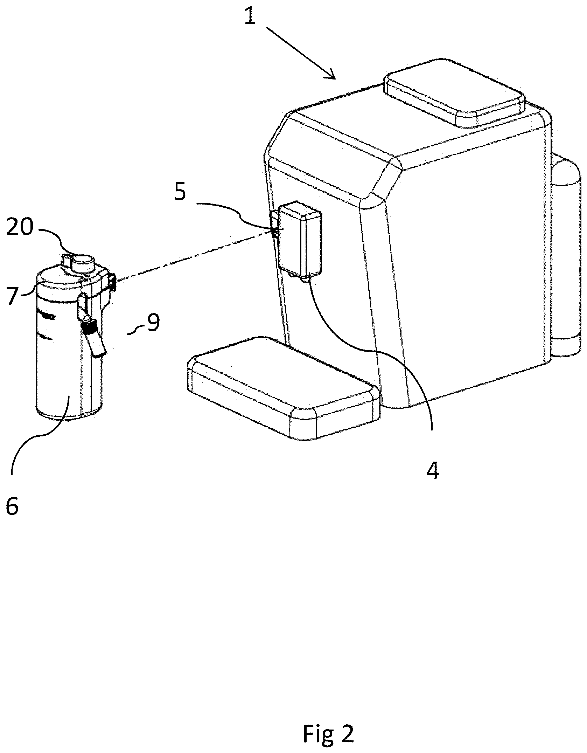

- figure 2 shows the coffee machine with the emulsifying device disconnected;
- figure 3 shows a vertical section of the mixing chamber of the emulsifying device for producing the cold emulsion of milk;
- figure 4 shows the knob with the valve means for producing the cold emulsion of milk;
- figure 5 shows a vertical section of the mixing chamber of the emulsifying device for producing the hot emulsion of milk;
- figure 6 shows the knob with the valve means for producing the hot emulsion of milk;

With reference to the figures cited, a coffee machine is shown and indicated in its entirety by reference number 1.

The coffee machine 1 comprises a water tank 23, boiler 2 for the production of steam, a water supply pump 3 for supplying water to the boiler 2 for generation of steam, an external coffee dispenser 4, an external steam dispenser 5, and a milk container 6 having an emulsifying device 7 for emulsifying the milk by Venturi effect.

The external steam dispenser 5 is configured to dispense a steam flow comprised between 0.8 g/s and 1.2 g/s at a temperature comprised between 110 °C and 130 °C and at a pressure comprised between 0.5 atm and 2 atm.

Preferably, the coffee machine 1 is configured to dispense the milk emulsion directly into the cup and for this purpose features a cup resting surface 8 on which also the milk container 6 rests.

In particular, the external coffee dispenser 4 is configured and arranged for direct dispensing into a cup below positioned on the cup resting surface 8, and the emulsifying device 7 has an external dispenser of the milk emulsion 9 which is also configured and arranged for direct dispensing into the cup.

The emulsifying device 7 has a mixing chamber 10 for mixing milk/steam/air, a milk aspirating channel 12 for aspirating the withdrawn milk by Venturi effect from the milk container 6 and having an inlet opening 11 into the mixing chamber 10, an air aspirating channel 14 by Venturi effect having valve means 15 and an inlet opening 13 into the mixing chamber 10, a sealed removable connection opening 16 with the external steam dispenser 5, and an outlet opening 17 of the milk emulsion connected to the external dispenser 9 of the milk emulsion.

The emulsifying device 7 is integrated into an extractable cover 18 of the milk container 6, but in one version it can be integrated directly into the milk container 6.

The outlet opening 17 is positioned on the extension of the axis L of the external steam dispenser 5 whilst the milk inlet opening 11 and the air inlet opening 13 are arranged radially and on the side opposite the extension of the axis L of the external steam dispenser 5.

The milk aspirating channel 12 can consist at least partially of a structurally independent tubular piece stiffly connected to the body of the mixing chamber 10 and extending as far as the bottom of the milk container 6.

The external dispenser of the milk emulsion 9 can consist at least partially of a structurally independent tubular piece connected rotatably to the body of the mixing chamber 10 between a rest position and a dispensing position.

The valve means 15 can comprise a shutter and a knob 20 for driving thereof adapted to close or open in an adjustable manner the air aspirating channel 14.

The shutter in the case under examination consists of a hollow stem 30 that extends coaxially and solidly constrained to the knob 20.

The hollow stem 20 is in turn housed coaxially in the air aspirating channel 14 and engages peripherally with a tilted internal perimeter rib 31 of the air aspirating channel 14.

The tilted rib 31 can be formed on a removable portion of the air aspirating channel 14.

The hollow stem 20 is provided with an air inlet opening 22 in the air aspirating channel 14.

The air inlet opening 22 in the air aspirating channel 14 is configured as a slit that extends in the axial direction of the hollow stem 20.

The atmospheric air enters the cavity of the stem 20 through the slit and the cavity of the stem 20 communicates directly with the inlet opening 13 for the entry of the air into the mixing chamber 10.

The rotation of the knob 20 on its axis varies the intersection position of the slit with the tilted rib 31 and then varies the section of the slit that is used for the entry of air into the aspirating channel 14.

The section of the slit used for the entry of the air into the air aspirating channel 14 is in fact the section comprised between the apex of the slit and the point where the slit intersects the rib 31. The air aspirating channel 14 is closed when the tilted rib 31 is positioned at an upper apex of the slit.

Starting from this position, as the knob 20 is rotated, a progressively increasing section of the slit opens and then an inlet area for the entry of the air into the air aspirating channel 14 grows progressively up to a maximum value.

Downstream of the slit, the air passage area along the air aspirating channel is the same as or greater than the aforesaid maximum value.

It is clear that the amount of the increase of the inlet area for the entry of the air into the air aspirating channel 14 is correlated with the width of the slit, the wider the slit, the greater the inlet area for the entry of the air into the air aspirating channel 14 and the maximum value thereof. The milk aspirating channel 12 has a minimal passage area sufficiently large as to ensure the dispensing of a milk emulsion having a weight of between 2% and 8%, still better between 3% and 6% greater than the weight of the milk aspirated from the milk container 6, the additional weight of the milk emulsion compared to the aspirated milk being that of the condensed steam included into the milk emulsion.

In particular, the milk aspirating channel 12 has a minimal passage area sufficiently large as to ensure the dispensing of a flow of milk emulsion having a value comprised between 10 g/s and 15 g/s.

The milk inlet opening 11 is circular and has a diameter not less that 5 mm, preferably comprised between 5 mm and 10 mm.

The milk aspirating channel 12 has a minimum inner cross section that is not less than the inlet opening of the milk 11.

The dispensing opening 21 of the external steam dispenser 5 is circular and has a diameter comprised between 0.5 mm and 2 mm, preferably between 0.5 mm and 1 mm, and is lower than the outlet opening 17.

The air aspirating opening is circular and has a diameter comprised between 0.2 mm and 1 mm. The valve means 15, as said, adjusts the air passage area along the air aspirating channel 14.

The inlet opening 22 of the air in the air aspirating channel 14, in a maximum opening configuration, has an equivalent diameter comprised between 0.3 mm and 2 mm.

Equivalent diameter means the diameter of a circular area of the same size as the area of the inlet opening 22 for entry of the air into the air aspirating channel 14.

The outlet opening 17 is circular and has a diameter comprised between 2 mm and 5 mm, preferably between 2 mm and 2.5 mm.

The emulsifying device 7 by Venturi effect can thus have great milk aspiration efficiency with an aspirated milk flow of not less than 10 g/s.

With the milk aspirating channel 12 that is thus dimensioned, a milk emulsion is obtained at a temperature that is not higher than 25°C when the temperature of the milk present in the milk container 6 is comprised between 3°C and 7°C.

In order to maintain the temperature at a value that is significantly below ambient temperature, the milk container 6 can have thermal insulation.

The milk emulsifying device can have interchangeable parts for dispensing a hotter milk emulsion. In particular, the air adjusting valve means and preferably also the milk aspirating channel can be interchangeable.

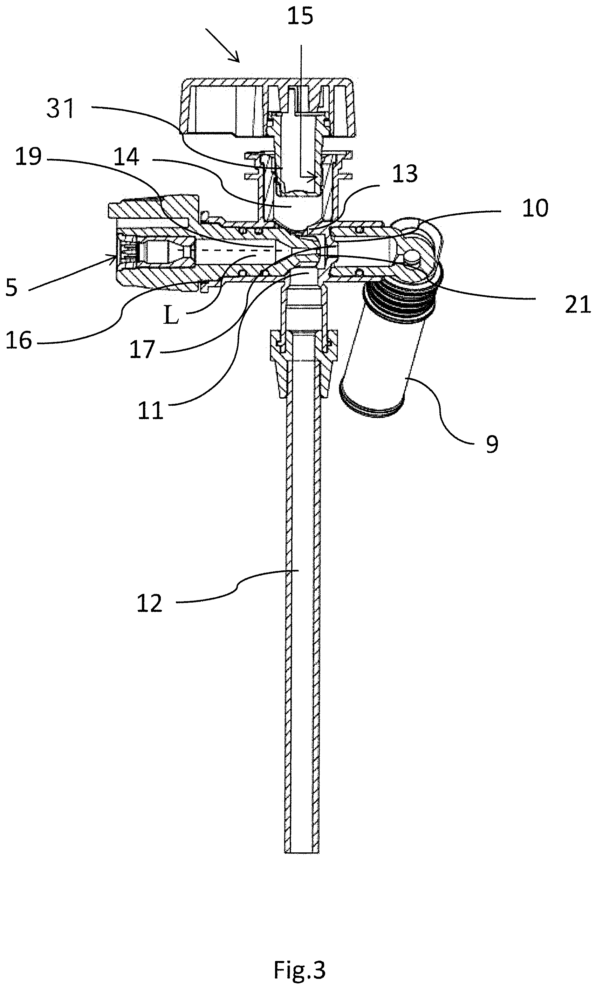

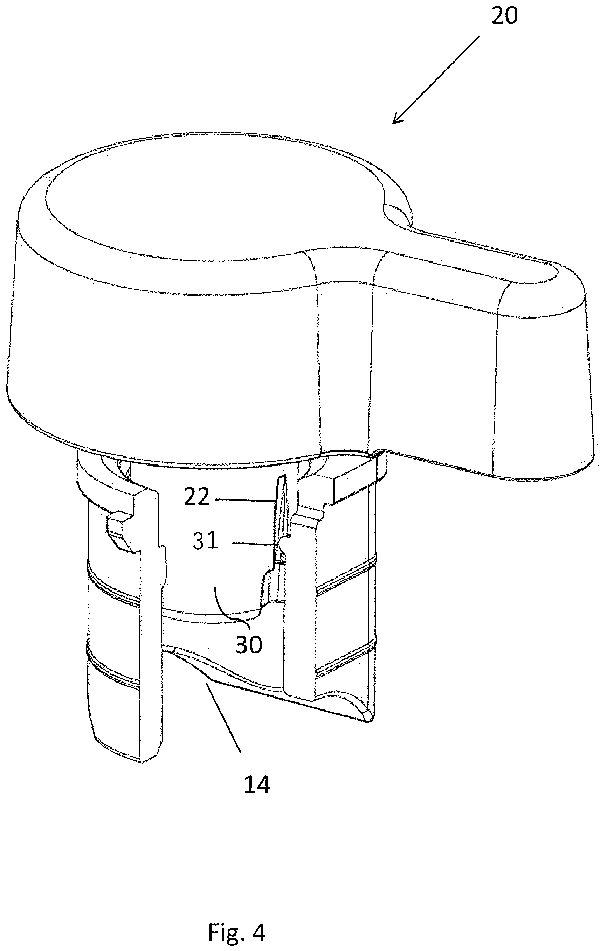

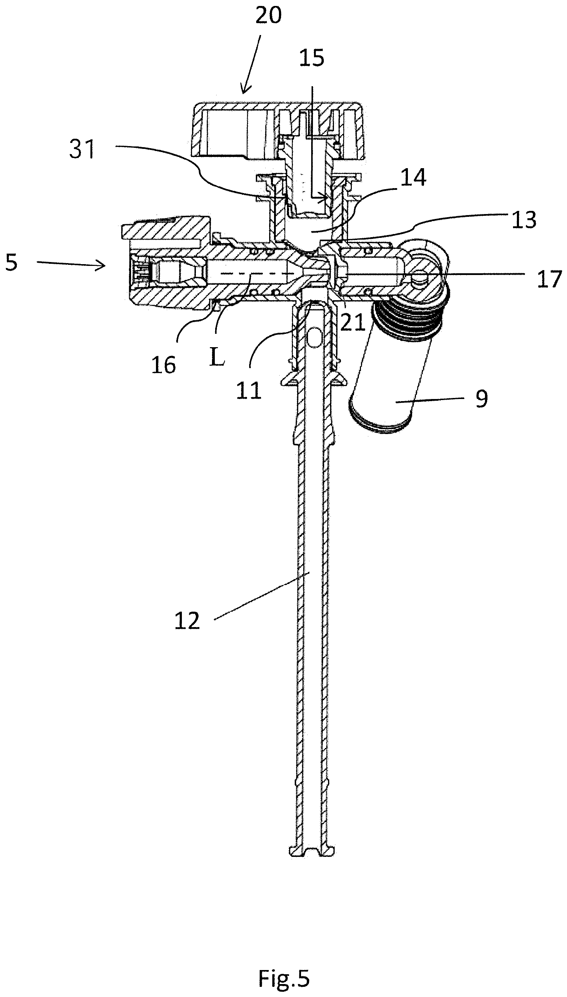

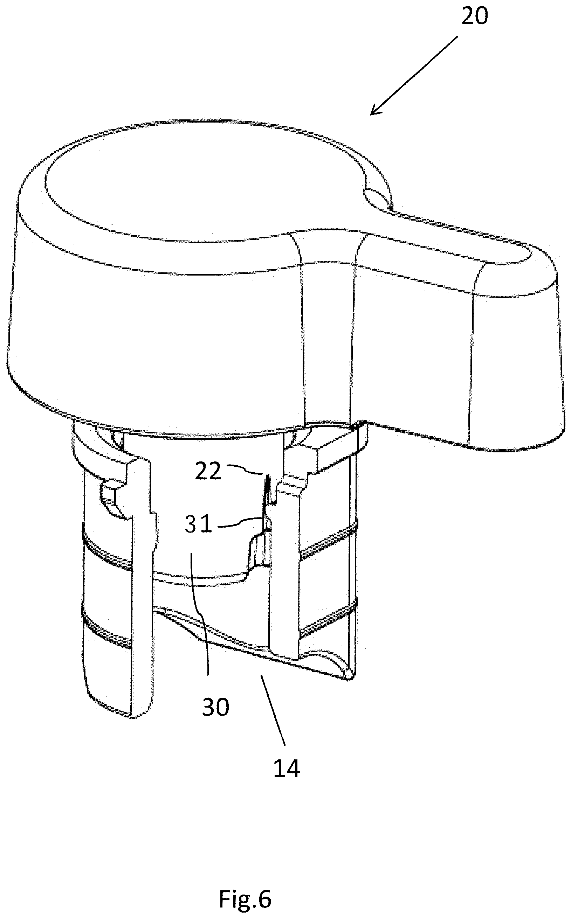

The comparison between the air adjusting valve means and the milk aspirating channel illustrated in figures 3 and 4 with the means illustrated in figures 5 and 6 clarifies better, also visually, the difference.

In fact, for producing a hotter milk emulsion, the milk aspirating channel illustrated in figures 5 and 6 is used, that, having a lower minimal passage area, for example at the end of the interchangeable part, lowers the efficiency of milk aspiration by Venturi effect.

Further, again for producing a hotter milk emulsion, valve means illustrated in figures 5 and 5 can be used that provides a smaller maximum passage area of the inlet opening 22 for entry of the air into the air aspirating channel 14 because the slit has a reduced width.

With these replacements, a milk emulsion can be produced at a final temperature in the cup comprised between 50°C and 75°C.

The method for dispensing the milk emulsion increases the efficiency of milk aspiration by Venturi effect by increasing, with respect to a traditional emulsifying device that produces a hotter milk emulsion, the minimal passage area of the milk aspirating channel up to a value corresponding to dispensing a milk emulsion having a weight of between 2% and 8% greater than the weight of the milk aspirated from the container, and a flow of milk emulsion having a value comprised between 10 g/s and 15 g/s.

Compared to prior art emulsifying devices by Venturi effect for aspirating milk and air in the mixing chamber, the minimal passage area of the milk aspirating channel is now increased up to a value corresponding to the dispensing of a milk emulsion at a temperature that is not higher than 25°C when the temperature of the milk present in the milk container is comprised between 3°C and 7°C and the steam dispensed by the external steam dispenser 5 has a temperature comprised between 110 °C and 130 °C and a pressure comprised between 0.5 atm and 2 atm.

The coffee machine as conceived herein is susceptible to many modifications and variations, as long as they fall within the scope of the appended claims.

For example, the various openings disclosed above, also those that are disclosed for example as having a circular shape, can have a non-circular shape and in this case diameter is to be intended to be the equivalent diameter, i.e. the diameter of a circle that has substantially the same non-circular opening area.

Further, the scope of the claims is intended to cover milk emulsions of animal or vegetable origin (for example cow's milk, soya milk, oat milk, rice milk, goat's milk, buffalo milk, sheep milk etc.)

## Claims

1. A coffee machine (1) comprising a water tank (23), a boiler (2) for the production of steam, a water supply pump (3) for supplying water to the boiler (2) for generation of steam, an external coffee dispenser (4), an external steam dispenser (5) having a dispensing opening (21) for dispensing a steam flow, a milk container (6) having an emulsifying device (7) for emulsifying the milk by Venturi effect generated by the steam flow, said emulsifying device (7) being integrated in an extractable cover (18) of the milk container (6) and having a mixing chamber (10) for mixing milk/steam/air, a milk aspirating channel (12) by Venturi effect having an inlet opening (11) into the mixing chamber (10), an air aspirating channel (14) by Venturi effect having an inlet opening (13) into the mixing chamber (10), said mixing chamber (10) having a sealed removable connection opening (16) with the external steam dispenser (5) and an outlet opening (17) of the milk emulsion aligned to the steam dispensing opening (21) and connected to an external dispenser (9) of the milk emulsion, wherein the outlet opening (17) of the milk emulsion is larger than the steam dispensing opening (21) for the activation of the Venturi effect, **characterised in that** said minimal passage area of said milk aspirating channel (12) has a diameter not less than 5 mm, the dispensing opening area (21) of the external steam dispenser (5) has a diameter comprised between 0.5 mm and 2 mm, the outlet opening area (17) has a diameter comprised between 2 mm and 5 mm, an air inlet opening (22) in the air aspirating channel (14) has, in a maximum opening configuration, a diameter comprised between 0,3 mm and 2 mm, and said external steam dispenser (5) is configured to dispense a steam flow comprised between 0.8 g/s and 1.2 g/s at a steam temperature comprised between 110 °C and 130 °C and at a steam pressure comprised between 0.5 and 2 atm.

2. The coffee machine (1) according to claim 1, **characterised in that** said minimal passage area of said milk aspirating channel (12) has a diameter comprised between 5 mm and 10 mm.

3. The coffee machine (1) according to any previous claim, **characterised in that** the dispensing opening area (21) of the external steam dispenser (5) has a diameter comprised between 0.5 mm and 1 mm, and the outlet opening area (17) has a diameter comprised between 2 mm and 2.5 mm.

4. The coffee machine (1) according to any previous claim, **characterised in that** said milk container (6) has a thermal insulation.

5. The coffee machine (1) according to any previous claim, **characterised in that** said milk aspirating channel (12) is interchangeable with a milk aspirating channel having a smaller minimal passage area.

6. The coffee machine (1) according to any previous claim, wherein a cup resting surface (8) is provided, wherein the external coffee dispenser (4) is configured and arranged for direct dispensing into a cup positioned on the cup resting surface (8), wherein the external milk emulsion dispenser (9) is configured and arranged for direct dispensing into said cup.

7. The coffee machine (1) according to any previous claim, **characterised in that** the milk aspirating channel (12) consists at least partially of a structurally independent tubular piece stiffly connected to the body of the mixing chamber (10) and extending as far as the bottom of the milk container (6).

8. The coffee machine (1) according to any previous claim, **characterised in that** the external milk emulsion dispenser (9) consists at least partially of a structurally independent tubular piece connected rotatably to the body of the mixing chamber (10) between a rest position and a dispensing position.

9. The coffee machine (1) according to any previous claim, **characterised in that** the outlet opening (17) of the mixing chamber (10) is positioned on the extension of an axis (L) of the external steam dispenser (5) whilst the milk inlet opening (11) and the air inlet opening (13) are arranged radially and on the side opposite the extension of the axis (L) of the external steam dispenser (5).

10. A dispensing method for dispensing a milk emulsion into a cup with a coffee machine (1) comprising a water tank (23), a boiler (2) for the production of steam, a water supply pump (3) for supplying water to the boiler (2) for generation of steam, an external coffee dispenser (4), an external steam dispenser (5) having a dispensing opening (21) for dispensing a steam flow, a milk container (6) having an emulsifying device (7) for emulsifying the milk by Venturi effect generated by the steam flow, said emulsifying device (7) having a mixing chamber (10) for mixing milk/steam/air and being integrated in an extractable cover (18) of the milk container (6), a milk aspirating channel (12) by Venturi effect having an inlet opening (11) into the mixing chamber (10), an air aspirating channel (14) by Venturi effect having an inlet opening (13) into the mixing chamber (10), said mixing chamber (10) having a sealed removable connection opening (16) with the external steam dispenser (5) and an outlet opening (17) of the milk emulsion aligned to the steam dispensing opening (21) and connected to an external dispenser (9) of the milk emulsion, wherein the outlet opening (17) of the milk emulsion is larger than the steam dispensing opening (21) for the activation of the Venturi effect, **characterised in** dispensing a flow of milk emulsion having a value comprised between 10 g/s and 15 g/s at a temperature no more than 25°C higher than the temperature of the milk present in the milk container (6) by means of a reduced thermal energy contribution of the steam used to milk aspiration, said milk emulsion having a weight of between 2% and 8% greater than the weight of the milk aspirated from the milk container (6), the additional weight of said milk emulsion compared to the aspirated milk being that of the condensed steam included into said milk emulsion.

11. A dispensing method for dispensing a milk emulsion according to claim 10, **characterised in** dispensing a flow of milk emulsion having a value comprised between 10 g/s and 15 g/s at a temperature no more than 20°C higher than the temperature of the milk present in the milk container (6).

12. A dispensing method for dispensing a milk emulsion according to any previous claim 10 and 11, **characterised in** filling said container (6) with milk having a temperature comprised between 3°C and 7°C.

## Patentansprüche

1. Kaffeemaschine (1), umfassend einen Wassertank (23), einen Boiler (2) zur Erzeugung von Dampf, eine Wasserzuführpumpe (3) zum Zuführen von Wasser zu dem Boiler (2) zur Erzeugung von Dampf, einen externen Kaffeeausgeber (4), einen externen Dampfausgeber (5) mit einer Ausgabeöffnung (21) zum Ausgeben eines Dampfstroms, einen Milchbehälter (6) mit einer Emulgiervorrichtung (7) zum Emulgieren der Milch durch einen durch den Dampfstrom erzeugten Venturi-Effekt, wobei die Emulgiervorrichtung (7) in einen abnehmbaren Deckel (18) des Milchbehälters (6) integriert ist und eine Mischkammer (10) zum Mischen von Milch/Dampf/Luft, einen Milchansaugkanal (12) durch Venturi-Effekt mit einer Einlassöffnung (11) in die Mischkammer (10), einen Luftansaugkanal (14) durch Venturi-Effekt mit einer Einlassöffnung (13) in die Mischkammer (10) aufweist, wobei die Mischkammer (10) eine abgedichtete lösbare Verbindungsöffnung (16) mit dem externen Dampfausgeber (5) und eine Auslassöffnung (17) der Milchemulsion aufweist, die mit der Dampfausgabeöffnung (21) ausgerichtet und mit einem externen Ausgeber (9) der Milchemulsion verbunden ist, wobei die Auslassöffnung (17) der Milchemulsion größer ist als die Dampfausgabeöffnung (21) zur Aktivierung des Venturi-Effekts, **dadurch gekennzeichnet, dass** die minimale Durchgangsfläche des Milchansaugkanals (12) einen Durchmesser von nicht weniger als 5 mm aufweist, die Ausgabeöffnungsfläche (21) des externen Dampfausgebers (5) einen Durchmesser zwischen 0,5 mm und 2 mm aufweist, die Auslassöffnungsfläche (17) einen Durchmesser zwischen 2 mm und 5 mm aufweist, eine Lufteinlassöffnung (22) in dem Luftansaugkanal (14) in einer maximalen Öffnungskonfiguration einen Durchmesser zwischen 0,3 mm und 2 mm aufweist, und der externe Dampfausgeber (5) dazu konfiguriert ist, einen Dampfstrom zwischen 0,8 g/s und 1,2 g/s bei einer Dampftemperatur zwischen 110 °C und 130 °C und bei einem Dampfdruck zwischen 0,5 und 2 atm auszugeben.

2. Kaffeemaschine (1) nach Anspruch 1, **dadurch gekennzeichnet, dass** die minimale Durchgangsfläche des Milchansaugkanals (12) einen Durchmesser zwischen 5 mm und 10 mm aufweist.

3. Kaffeemaschine (1) nach einem der vorhergehenden Ansprüche, **dadurch gekennzeichnet, dass** die Ausgabeöffnungsfläche (21) des externen Dampfausgebers (5) einen Durchmesser zwischen 0,5 mm und 1 mm aufweist und die Auslassöffnungsfläche (17) einen Durchmesser zwischen 2 mm und 2,5 mm aufweist.

4. Kaffeemaschine (1) nach einem der vorhergehenden Ansprüche, **dadurch gekennzeichnet, dass** der Milchbehälter (6) eine Wärmeisolierung aufweist.

5. Kaffeemaschine (1) nach einem der vorhergehenden Ansprüche, **dadurch gekennzeichnet, dass** der Milchansaugkanal (12) mit einem Milchansaugkanal austauschbar ist, der eine kleinere minimale Durchgangsfläche aufweist.

6. Kaffeemaschine (1) nach einem der vorhergehenden Ansprüche, wobei eine Tassenabstellfläche (8) vorgesehen ist, wobei der externe Kaffeeausgeber (4) zum direkten Ausgeben in eine auf der Tassenabstellfläche (8) positionierte Tasse konfiguriert und angeordnet ist, wobei der externe Milchemulsionsausgeber (9) zum direkten Ausgeben in die Tasse konfiguriert und angeordnet ist.

7. Kaffeemaschine (1) nach einem der vorhergehenden Ansprüche, **dadurch gekennzeichnet, dass** der Milchansaugkanal (12) zumindest teilweise aus einem strukturell unabhängigen rohrförmigen Stück besteht, das starr mit dem Körper der Mischkammer (10) verbunden ist und sich bis zum Boden des Milchbehälters (6) erstreckt.

8. Kaffeemaschine (1) nach einem der vorhergehenden Ansprüche, **dadurch gekennzeichnet, dass** der externe Milchemulsionsausgeber (9) zumindest teilweise aus einem strukturell unabhängigen rohrförmigen Stück besteht, das drehbar mit dem Körper der Mischkammer (10) zwischen einer Ruhestellung und einer Ausgabestellung verbunden ist.

9. Kaffeemaschine (1) nach einem der vorhergehenden Ansprüche, **dadurch gekennzeichnet, dass** die Auslassöffnung (17) der Mischkammer (10) auf der Verlängerung einer Achse (L) des externen Dampfausgebers (5) angeordnet ist, während die Milcheinlassöffnung (11) und die Lufteinlassöffnung (13) radial und auf der der Verlängerung der Achse (L) des externen Dampfausgebers (5) gegenüberliegenden Seite angeordnet sind.

10. Ausgabeverfahren zum Ausgeben einer Milchemulsion in eine Tasse mit einer Kaffeemaschine (1), umfassend einen Wassertank (23), einen Boiler (2) zur Erzeugung von Dampf, eine Wasserzuführpumpe (3) zum Zuführen von Wasser zu dem Boiler (2) zur Erzeugung von Dampf, einen externen Kaffeeausgeber (4), einen externen Dampfausgeber (5) mit einer Ausgabeöffnung (21) zum Ausgeben eines Dampfstroms, einen Milchbehälter (6) mit einer Emulgiervorrichtung (7) zum Emulgieren der Milch durch einen durch den Dampfstrom erzeugten Venturi-Effekt, wobei die Emulgiervorrichtung (7) eine Mischkammer (10) zum Mischen von Milch/Dampf/Luft aufweist und in einen abnehmbaren Deckel (18) des Milchbehälters (6) integriert ist, einen Milchansaugkanal (12) durch Venturi-Effekt mit einer Einlassöffnung (11) in die Mischkammer (10), einen Luftansaugkanal (14) durch Venturi-Effekt mit einer Einlassöffnung (13) in die Mischkammer (10), wobei die Mischkammer (10) eine abgedichtete lösbare Verbindungsöffnung (16) mit dem externen Dampfausgeber (5) und eine Auslassöffnung (17) der Milchemulsion aufweist, die mit der Dampfausgabeöffnung (21) ausgerichtet und mit einem externen Ausgeber (9) der Milchemulsion verbunden ist, wobei die Auslassöffnung (17) der Milchemulsion größer ist als die Dampfausgabeöffnung (21) zur Aktivierung des Venturi-Effekts, **dadurch gekennzeichnet, dass** ein Strom von Milchemulsion mit einem Wert zwischen 10 g/s und 15 g/s bei einer Temperatur von nicht mehr als 25 °C über der Temperatur der in dem Milchbehälter (6) vorhandenen Milch mittels eines reduzierten Beitrags thermischer Energie des zur Milchansaugung verwendeten Dampfs ausgegeben wird, wobei die Milchemulsion ein Gewicht aufweist, das zwischen 2 % und 8 % größer ist als das Gewicht der aus dem Milchbehälter (6) angesaugten Milch, wobei das zusätzliche Gewicht der Milchemulsion im Vergleich zu der angesaugten Milch dasjenige des in der Milchemulsion enthaltenen kondensierten Dampfs ist.

11. Ausgabeverfahren zum Ausgeben einer Milchemulsion nach Anspruch 10, **dadurch gekennzeichnet, dass** ein Strom von Milchemulsion mit einem Wert zwischen 10 g/s und 15 g/s bei einer Temperatur von nicht mehr als 20 °C über der Temperatur der in dem Milchbehälter (6) vorhandenen Milch ausgegeben wird.

12. Ausgabeverfahren zum Ausgeben einer Milchemulsion nach einem der vorhergehenden Ansprüche 10 und 11, **dadurch gekennzeichnet, dass** der Behälter (6) mit Milch gefüllt wird, die eine Temperatur zwischen 3 °C und 7 °C aufweist.

## Revendications

1. Machine à café (1) comprenant un réservoir d'eau (23), une chaudière (2) pour la production de vapeur, une pompe d'alimentation en eau (3) pour alimenter en eau la chaudière (2) pour la génération de vapeur, un distributeur externe de café (4), un distributeur externe de vapeur (5) ayant une ouverture de distribution (21) pour distribuer un flux de vapeur, un récipient à lait (6) ayant un dispositif d'émulsification (7) pour émulsifier le lait par effet Venturi généré par le flux de vapeur, ledit dispositif d'émulsification (7) étant intégré dans un couvercle amovible (18) du récipient à lait (6) et ayant une chambre de mélange (10) pour mélanger lait/vapeur/air, un canal d'aspiration du lait (12) par effet Venturi ayant une ouverture d'entrée (11) dans la chambre de mélange (10), un canal d'aspiration d'air (14) par effet Venturi ayant une ouverture d'entrée (13) dans la chambre de mélange (10), ladite chambre de mélange (10) ayant une ouverture de raccordement amovible étanche (16) avec le distributeur externe de vapeur (5) et une ouverture de sortie (17) de l'émulsion de lait alignée avec l'ouverture de distribution de vapeur (21) et raccordée à un distributeur externe (9) de l'émulsion de lait, dans laquelle l'ouverture de sortie (17) de l'émulsion de lait est plus grande que l'ouverture de distribution de vapeur (21) pour l'activation de l'effet Venturi, **caractérisée en ce que** ladite zone minimale de passage dudit canal d'aspiration du lait (12) a un diamètre non inférieur à 5 mm, la zone de l'ouverture de distribution (21) du distributeur externe de vapeur (5) a un diamètre compris entre 0,5 mm et 2 mm, la zone de l'ouverture de sortie (17) a un diamètre compris entre 2 mm et 5 mm, une ouverture d'entrée d'air (22) dans le canal d'aspiration d'air (14) a, dans une configuration d'ouverture maximale, un diamètre compris entre 0,3 mm et 2 mm, et ledit distributeur externe de vapeur (5) est configuré pour distribuer un flux de vapeur compris entre 0,8 g/s et 1,2 g/s à une température de vapeur comprise entre 110 °C et 130 °C et à une pression de vapeur comprise entre 0,5 et 2 atm.

2. Machine à café (1) selon la revendication 1, **caractérisée en ce que** ladite zone minimale de passage dudit canal d'aspiration du lait (12) a un diamètre compris entre 5 mm et 10 mm.

3. Machine à café (1) selon l'une quelconque des revendications précédentes, **caractérisée en ce que** la zone de l'ouverture de distribution (21) du distributeur externe de vapeur (5) a un diamètre compris entre 0,5 mm et 1 mm, et la zone de l'ouverture de sortie (17) a un diamètre compris entre 2 mm et 2,5 mm.

4. Machine à café (1) selon l'une quelconque des revendications précédentes, **caractérisée en ce que** ledit récipient à lait (6) présente une isolation thermique.

5. Machine à café (1) selon l'une quelconque des revendications précédentes, **caractérisée en ce que** ledit canal d'aspiration du lait (12) est interchangeable avec un canal d'aspiration du lait ayant une zone minimale de passage plus petite.

6. Machine à café (1) selon l'une quelconque des revendications précédentes, dans laquelle une surface de support de tasse (8) est prévue, dans laquelle le distributeur externe de café (4) est configuré et agencé pour une distribution directe dans une tasse positionnée sur la surface de support de tasse (8), dans laquelle le distributeur externe d'émulsion de lait (9) est configuré et agencé pour une distribution directe dans ladite tasse.

7. Machine à café (1) selon l'une quelconque des revendications précédentes, **caractérisée en ce que** le canal d'aspiration du lait (12) consiste au moins partiellement en une pièce tubulaire structurellement indépendante, raccordée rigidement au corps de la chambre de mélange (10) et s'étendant jusqu'au fond du récipient à lait (6).

8. Machine à café (1) selon l'une quelconque des revendications précédentes, **caractérisée en ce que** le distributeur externe d'émulsion de lait (9) consiste au moins partiellement en une pièce tubulaire structurellement indépendante, raccordée de manière rotative au corps de la chambre de mélange (10) entre une position de repos et une position de distribution.

9. Machine à café (1) selon l'une quelconque des revendications précédentes, **caractérisée en ce que** l'ouverture de sortie (17) de la chambre de mélange (10) est positionnée sur le prolongement d'un axe (L) du distributeur externe de vapeur (5), tandis que l'ouverture d'entrée du lait (11) et l'ouverture d'entrée d'air (13) sont agencées radialement et du côté opposé au prolongement de l'axe (L) du distributeur externe de vapeur (5).

10. Procédé de distribution pour distribuer une émulsion de lait dans une tasse avec une machine à café (1) comprenant un réservoir d'eau (23), une chaudière (2) pour la production de vapeur, une pompe d'alimentation en eau (3) pour alimenter en eau la chaudière (2) pour la génération de vapeur, un distributeur externe de café (4), un distributeur externe de vapeur (5) ayant une ouverture de distribution (21) pour distribuer un flux de vapeur, un récipient à lait (6) ayant un dispositif d'émulsification (7) pour émulsifier le lait par effet Venturi généré par le flux de vapeur, ledit dispositif d'émulsification (7) ayant une chambre de mélange (10) pour mélanger lait/vapeur/air et étant intégré dans un couvercle amovible (18) du récipient à lait (6), un canal d'aspiration du lait (12) par effet Venturi ayant une ouverture d'entrée (11) dans la chambre de mélange (10), un canal d'aspiration d'air (14) par effet Venturi ayant une ouverture d'entrée (13) dans la chambre de mélange (10), ladite chambre de mélange (10) ayant une ouverture de raccordement amovible étanche (16) avec le distributeur externe de vapeur (5) et une ouverture de sortie (17) de l'émulsion de lait alignée avec l'ouverture de distribution de vapeur (21) et raccordée à un distributeur externe (9) de l'émulsion de lait, dans lequel l'ouverture de sortie (17) de l'émulsion de lait est plus grande que l'ouverture de distribution de vapeur (21) pour l'activation de l'effet Venturi, **caractérisé par** la distribution d'un flux d'émulsion de lait ayant une valeur comprise entre 10 g/s et 15 g/s à une température ne dépassant pas de plus de 25 °C la température du lait présent dans le récipient à lait (6) au moyen d'un apport réduit d'énergie thermique de la vapeur utilisée pour l'aspiration du lait, ladite émulsion de lait ayant un poids supérieur de 2 % à 8 % au poids du lait aspiré depuis le récipient à lait (6), le poids supplémentaire de ladite émulsion de lait par rapport au lait aspiré étant celui de la vapeur condensée incluse dans ladite émulsion de lait.

11. Procédé de distribution pour distribuer une émulsion de lait selon la revendication 10, **caractérisé par** la distribution d'un flux d'émulsion de lait ayant une valeur comprise entre 10 g/s et 15 g/s à une température ne dépassant pas de plus de 20 °C la température du lait présent dans le récipient à lait (6).

12. Procédé de distribution pour distribuer une émulsion de lait selon l'une quelconque des revendications précédentes 10 et 11, **caractérisé par** le remplissage dudit récipient (6) avec du lait ayant une température comprise entre 3 °C et 7 °C.
